Europäisches Patentamt

European Patent Office

Office européen des brevets

(19)

(11) EP 1 094 304 A1

(12) EUROPEAN PATENT APPLICATION

(43) Date of publication:
25.04.2001 Bulletin 2001/17

(51) Int Cl.⁷: G01F 1/32, G01F 1/66

(21) Application number: 99308169.4

(22) Date of filing: 18.10.1999

(84) Designated Contracting States:
AT BE CH CY DE DK ES FI FR GB GR IE IT LI LU MC NL PT SE
Designated Extension States:
AL LT LV MK RO SI

(71) Applicant: Aquametro AG
4106 Therwil (CH)

(72) Inventors:
• Sanderson, Michael Langley
Milton Keynes, Buckinghamshire MK5 8AD (GB)

• Rawes, William Leslie Hodges
Bedford, Bedfordshire MK40 3RA (GB)
• Vincent, Michael Grange
4106 Therwil (CH)
• Marlowe, Stephen
Leighton Buzzard, Bedfordshire LU7 7SY (GB)

(74) Representative: Lawrence, John
Barker Brettell
138 Hagley Road
Edgbaston
Birmingham B16 9PW (GB)

(54) Improvements relating to flow measurement

(57) A flowmeter (1) is disclosed which comprises a body having a portion in which the fluid flow oscillates as a function of flow through the body. The meter is provided with two ultrasonic transducers (10,11), a first one of the transducers transmitting ultrasound an second one receiving the ultrasound after it has been through the oscillating fluid. A processor is provided which compares the phase of the signal output from the second transducer (11) with a reference signal indicative of flow rate. Third and fourth transducers may also be provided to generate the reference signal.

To be accompanied, when published, by Figure 1 of the drawings.

Fig. 1

**Description**

This invention relates to improvements in flow measurement and in particular relates to improvements in methods and apparatus for determining the rate of flow of fluid through a fluidic oscillator.

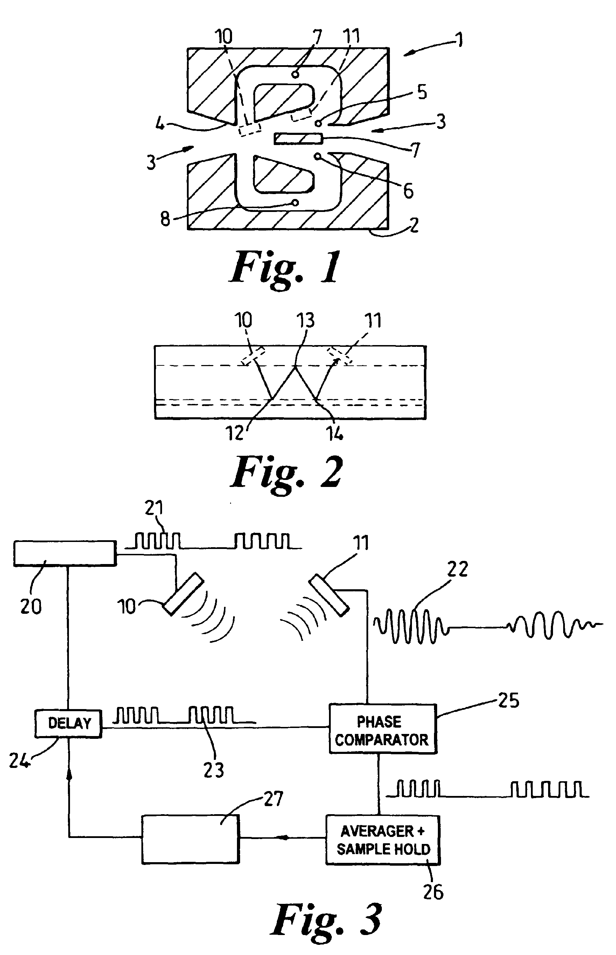

The fluidic oscillator is just one example of a flow meter which is well known in the art. In a fluidic oscillator, the Coanda effect, for example, causes flow to adhere to one side of the passage through a meter, until feedback flow diverts it to the other side. Thus, the flow oscillates between two alternative unstable positions, and the frequency of oscillation is proportional to the flow rate. A typical fluidic oscillator is shown in Figure 1 as prior art. However, the problem with fluidic oscillators is one of obtaining a measurement of the rate of oscillation in order to extract information encoding the flow rate.

Several prior art techniques for reading the flow of fluid have been developed. GB 2 120 384 discloses a flow meter in which an ultrasonic signal is transmitted along a path in a fluidic oscillator to a detector. The signal is deflected away from the detector by an amount dependent upon the rate of flow of the fluid, and the amplitude of the detected signal is used to measure flow rate. A drawback with this approach is that the use of an amplitude modulation scheme is not well suited to the development of low power devices, is sensitive to noise, and is therefore not well suited to the detection of the oscillation frequency in liquid applications where the amount of deflection is significantly smaller than in gases. Thermal gradients within the fluid can also give rise to noise in the form of modulation of the amplitude of the signal at frequencies unrelated to the oscillation frequency.

Another ultrasound technique is known from International Patent Application published as WO95/35448. Again, amplitude modulation is used to determine flow rate from a received ultrasound signal which has passed through the flowing fluid. In this design the ultrasonic transducers are invasive and modification to the fluidic oscillator geometry is required to accommodate the ultrasonic transducers.

Finally, EP 0 426 309 discloses a method of measuring the flow rate of fluid by transmitting a signal through the fluid which contains a phase change as a marker. Amplitude measurements are used in combination with measurements of the time of arrival of the marker to determine accurately the time of flight of the signal. This provides a measure of the flow rate of the fluid.

An object of the present invention is to provide a measurement device and method of measuring the flow rate of a fluid which consumes little power and ameliorates the problems associated with amplitude modulation schemes suggested prior to the present invention.

In accordance with the present invention, we provide a meter in which the rate of flow of fluid in at least a first portion of the meter varies periodically as a function of the overall rate of flow of fluid (such as a fluidic oscillator), in which the meter is provided with at least a first and second ultrasonic transducer, said first transducer being adapted to transmit a first ultrasound signal and said second transducer being adapted to receive said emitted ultrasound signal from said first transducer after it has propagated through fluid in the first portion of the meter to produce a first output signal, and a processing means adapted to compare the phase of the first output signal from the second transducer with the phase of a reference signal to produce a second output signal, said second output signal being adapted to provide information indicative of the flow rate of the fluid being monitored.

Preferably, a third and fourth transducer are provided, and the third transducer is adapted to transmit a second ultrasound signal through fluid in the meter and said fourth transducer is adapted to receive said second signal to produce said reference signal. The first and second ultrasound signals may propagate along the same path in different directions or the second signal may propagate along a second path which is different from the path taken by the said first signal (the first path). The second ultrasound signal may be transmitted through the first portion.

Alternatively, the reference signal may be produced electronically without propagation of a second signal through the fluid, and may be compared with the first output signal. In this case, the reference signal cannot be affected by variations in flow rate of the fluid.

In the case where a first signal and a second signal propagate through the fluid, the first signal may propagate along a path having a component in the direction (or opposite to the direction) of flow of fluid along the first path, and the second signal may propagate along a path having a component in the opposite direction to that of the first signal. Both the first and second ultrasound signals may be modulated by the flow of fluid, or only the first ultrasound signal may be modulated by the flow of fluid.

In the case where the ultrasound signals propagate along the same path, the first and fourth transducers may comprise a single combined transducer assembly, and similarly for the second and third transducers. A single transducer which can act as an emitter/receiver can be used in each case.

In the case where one signal propagates through the fluid and the reference signal is independent of fluid flow, the phase of the first signal varies with fluid flow rate whilst the phase of the reference signal is unaffected. The phase difference between the two signals therefore changes as a function of flow due to the change in the first signal.

In the case where a first ultrasound signal and second ultrasound signal propagate through the fluid, both the first output signal and the reference signal may be phase modulated by the fluid flow rate (depending upon the path travelled by the ultrasound signals). The difference in phase between the two signals will vary if the phase of each signal is affected differently by the fluid flow rate. This is achieved by ensuring that the first and second flow path are different in so far as to affect the phase by different amounts on each signal.

For example, consider the first flow path to have a propagation length d, the nominal speed of the propagating first ultrasound signal in a non-flowing fluid to be c and the flow rate dependent change in speed given by the variable v. The propagation time $t_1$ for the first signal will be:

$$t_1 = \frac{d}{c + v}$$

Next, assume that the second signal propagates along a second path of equal length d but opposite in direction to the first signal, with a nominal speed of c and a flow rate dependent change in velocity denoted -v (opposite sign as it is travelling in the opposite direction). Hence, the time of flight of the second signal is given by:

$$t_2 = \frac{d}{c - v}$$

Thus, the phase difference ($\Delta\emptyset$) between the first output signal and reference signal will be:

$$\Delta\emptyset = 4\Pi f \frac{v.d}{c^2}$$

where $f$ is the frequency of the ultrasound.
Preferably the second output signal is, in use, used to calculate the overall rate of flow of fluid through the oscillator.
Preferably, the first and second transducers are arranged so that the first ultrasonic signal propagates along a path having a component in the direction (or opposite to the direction) of flow of fluid along the first path. The second ultrasonic signal (where provided) may in a most preferred arrangement propagate along substantially the same path in the opposite direction having a component in the direction of flow of fluid opposite to that of the first signal.
Preferably, the first signal comprises a plurality of first pulses. Preferably, the reference signal comprises one or more corresponding first pulses. This is advantageous as it uses less power than a continuous signal.
The invention may comprise comparing the phase of the first pulses of the first output signal with the phase of the first pulse(s) of the reference signal to generate a signal indicative of the phase shift of the first pulse of the output signal relative to the reference signal, and from a number of such phase comparisons between corresponding first pulses of the first output signal and the reference signal, the change in phase difference over time can be measured. As the overall phase difference changes at a frequency corresponding to the frequency of oscillation of the fluid flow rate in the first flow portion of the meter, a signal representing the oscillation frequency can be constructed. Obviously, the more frequent the first pulses, the more "accurate" the measurement of the phase variation.
The phase comparison may be made by comparing any known part of the first pulse of the output signal with a known corresponding part of a first pulse in the reference signal, i.e. by comparing the phase shift between two leading edges, two trailing edges, or some other part of the pulses. Thus, the pulses in the first emitted signal and the reference signal need not be of the same shape. To avoid an aliasing effect, the frequency of the first pulses should be at least twice the maximum expected frequency of oscillation, although it can be variable as discussed later in this description.
Preferably, each first pulse in said first signal comprises one or more second pulses. Each of the second pulses may be of similar width, or may be of different width but are preferably all of the same width. Thus, each pulse in the first signal may itself comprise a train of second pulses or perhaps an individual second pulse. Alternatively, the first pulse may comprise a sinusoidal or other waveform of varying amplitude. The second pulses preferably comprise square waves. Alternatively, a constant stream of second pulses may be emitted. By employing first pulses the system is said to operate in a burst mode. Thus, the first signal requires little or no power between the first pulses, which helps to minimise the overall power consumption.
Preferably, the processing means comprises a phase comparator adapted to compare the phase of the first output signal with the phase of the reference signal to produce the second output signal. The phase comparator may use the rate of change of the difference in phase between the two signals as being indicative of the rate of oscillation (the rate of change of flow rate) of the fluid in the first path of the oscillator. The processing means may compare the phase of only a part of the first output signal with the whole or part of the reference signal. In the most preferred arrangement, the phase comparator works using a current steering principle. In a preferred arrangement, the output of the phase comparator is substantially independent of amplitude variations of the received ultrasonic signals caused by thermal changes in the fluid or by variations in the arrival times of the ultrasonic signals caused by changes in the speed of sound of the fluid caused by thermal changes in the fluid.
Preferably, where only a single signal propagates through the fluid, the reference signal and the first signal are synchronised to a common clock, i.e. a control clock, and said reference signal is offset in time from said first signal so that the pulses in the reference signal overlap with the first output signal (when they reach the phase comparator). Preferably, the difference in time is such that the phase of the reference signal and the phase of the first output signal are substantially in quadrature (i.e. 90° out of phase). Thus, the reference signal may appear to comprise a facsimile of the first signal (or a part of it) offset in time by a delay. The delay ensures that when compared the second signal and reference signal overlap at least partially so as to overcome the effect of the length of the ultrasonic path on the transmit time of the first emitted signal.

Where both a first signal and a second signal (producing the reference signal) propagate through the fluid, the two signals transmitted may be chosen to be substantially in quadrature. Thus, quadrature is substantially maintained as the signals reach the receivers provided the path lengths are, for example, kept the same.

Preferably, where both a first signal and a second signal (producing the reference signal) propagate through the fluid along the same path in opposite directions the drive and receive electronics should be designed for reciprocal action, i.e. the ultrasonic transducers should be driven and detected into the same impedance. This will ensure that at zero flow the two receive signals will have identical envelopes phase shifted by 90° irrespective of any mis-match in the transducers or variations in the ultrasonic properties along the fluid path if they are driven by transmit signals which are themselves shifted by 90°.

Preferably, a transmission clock signal of higher frequency than the control clock frequency is provided, and said first signal comprises a train of second pulses at the transmission clock frequency which starts upon a predetermined (or each) rising (or trailing) edge of the control clock, the frequency of the control clock determining the frequency of the first pulses in the signals. Thus, a low frequency clock of low power may run continuously as the control clock, activating a high frequency clock (say of 2 MHz or the ultrasonic frequency required) only when needed to produce a burst of second pulses used to make the phase comparison. This can substantially reduce overall power consumption compared to running the high frequency clock continuously.

As stated, the first signal may comprise a train of first pulses. Looked at another way, the first signal may comprise one first pulse and a plurality of first signals may be emitted in succession. In the latter case, a first signal may be emitted on each control clock signal, or selected control clock signals.

Preferably, the number of second pulses in each first pulse of the first emitted signal and the number of second pulses in the first pulse of the reference signal may be varied. The number of second pulses in any selected first pulse of the emitted signal may be greater than the number of second pulses in the corresponding selected first pulse of the reference signal.

Where the total time of transit from the emitter to the receiver is significantly greater than the amount of variation in transit time, the delay applied to the reference signal may be chosen so that each of the second pulses of a first pulse of the output signal lies entirely within (with respect to time) the reference signal or vice versa. Preferably, the second pulses of the first output signal and the reference signal are aligned so as to be substantially in quadrature.

The reference signal and first output signal may be compared by passing them both through a phase comparator. The output of the phase comparator may be a pulse width modulated signal with the width of the signal being indicative of the phase difference between a single second pulse of the output signal and the reference signal. Alternatively, it may be a signal whose amplitude is indicative of the phase between a single second pulse of the output signal and the reference signal.

Where a number of second pulses are emitted in each first pulse, the phase comparator may effectively make several comparisons within each first pulse, and calculates an average width for the pulse width modulated signals from each comparison. This helps to improve the signal to noise ratio, as an average can be taken over time for each measurement.

A sample and hold circuit may be provided which samples the output of the phase comparator produced for a first pulse, and holds the sampled value until another first pulse arrives, whereupon a modified sampled value can be produced. In this way, an overall sampled output is produced which is indicative of the phase difference between the first output signal and the reference signal over time. A plot of the held output over time would be seen to vary in amplitude at a rate indicative of the rate of change of flow rate of the fluid in the first path.

Preferably, monitoring means are provided to monitor the temperature of the fluid. This may be used to compensate for changes in meter factor as a function of temperature. The monitoring means may include a temperature sensor which sends a signal indicative of temperature to a controller which is adapted to compensate the output of the meter for temperature.

A flow monitoring means may be provided to "turn-off" or deactivate at least a part of the apparatus when the overall flow rate drops below a present level. This allows power to be saved when there is not any need to take measurements. For example, in a domestic heating system, the fluid may only flow in the pipes in winter, and so the measurements of flow rate need not be taken during summer. This feature may, for example, prevent the system emitting first signals to reduce power.

Where a temperature sensor is provided, a change in value of the output of the temperature sensor may act as the trigger for activating and/or deactivating part of the fluidic oscillator.

A convenient location for the temperature sensor is within a splitter provided within the fluidic oscillator. Of course, the skilled person will appreciate other locations are possible.

Through the use of low power circuitry and the advantageous features of burst made operation, the meter may be battery-powered. Of course, the skilled person will appreciate that other power sources are equally possible.

Preferably, the transducers are located outside of the flow of fluid through the oscillator, i.e. non-invasive. They may be mounted on the outside or be an internal part of the meter body. The first and second transducers may be arranged at an angle and the first signal may be reflected at least once from a reflective surface in travelling from the first transducer to the second transducer. A similar arrangement can be employed for the third and fourth transducers. This allows the path length to be increased. The reflecting surfaces may be horizontal surfaces (e.g. in the plane of the page shown in figure 2). The reflecting surface(s) are preferably metallised or constructed of metal. This helps minimise power losses on reflection and allows the power of the system to be further reduced. This can eliminate the need for electrical amplification of the received signal. The rear (non-reflecting) surface of a metal reflector may be roughened to reduce waves propagating in the solid from being reflected from the back surface.

The location of the transducer relative to the meter body may be adjusted during assembly so as to trim the ultrasonic path length. This could be done by providing shims beneath transducer and the meter. Adjusting path length allows a fixed and easily generated delay to be employed in the generation of the reference signal.

Preferably, the frequency of the first pulse train is variable and may be adjusted by the user or automatically by the apparatus so that it is lowered as the oscillation rate of the fluid lowers (provided that it is always at least twice the oscillation rate to avoid aliasing effects). This adjustment helps to minimise power consumption by keeping the spacing between each first pulse at a maximum i.e. increasing the time between "bursts".

Preferably, the number of second pulses in each first pulse can be varied (again automatically/semi-automatically or manually in use or set-up) to reduce power, during operation, or may be fixed.

In the case of an electronically-provided reference signal, a feedback mechanism to control the delay of the reference signal may be used to keep the average phase shift between the reference signal and the second output signal substantially constant over time. This allows maximum dynamic range to be achieved, for example by ensuring the phases of each of the signals are always at or around quadrature.

The meter may be adapted to generate simultaneously at least two first pulses, separated by a phase difference of substantially 90°. The simultaneously generated pulses may be transmitted through the fluid at substantially the same time. Preferably the pulses are transmitted along substantiality the same path through the fluid in opposite directions.

At least one switch may be provided, adapted to route signals to the correct transducers and/or inputs of a phase comparator.

The phase comparator may be a double balanced modulator, providing a lower power technique which is advantageous if power consumption is a consideration.

In accordance with a second aspect of the invention, we provide a method of measuring the rate of flow of fluid through a flow meter comprising the steps of:

> generating a first ultrasound signal using a first transducer, receiving said ultrasound signal using a second transducer adapted to produce a first output signal dependent upon said first signal incident upon said second transducer after propagating along a first path through the meter having a component of travel in the direction of flow of fluid in the oscillator;
>
> generating a reference signal for comparison with said first signal, and comparing the phase of the first output signal with the phase of the reference signal to produce a second output signal indicative of the rate of flow of fluid through the oscillator.

The method may further comprise generating the reference signal by generating a second ultrasound signal using a third ultrasound transducer, and receiving the second ultrasound signal using a fourth transducer to produce the reference signal dependent upon said second signal incident upon said fourth transducer after propagating along a second path through the oscillator. The second path may preferably have a component of travel opposed to the component of travel of the first signal.

Thus, the reference signal may also be produced by propagating a signal through the fluid, and so may also be phase shifted as a function of the flow rate of the fluid through the oscillator.

Alternatively, the reference signal may be produced simply using an oscillator or clock without any need for a second signal propagating through the fluid. In this case, the phase of the reference signal would not be dependent upon the fluid flow rate.

A single combined emitter/receiver may act as either the first and fourth or second and third transducers.

Preferably, the method comprises providing the first and second transducer spaced apart and adapted to allow the ultrasonic first signal to propagate through a part of the oscillator in which, in use, the rate of flow of fluid varies periodically as a function of the overall rate of flow of fluid through the oscillator. A similar arrangement may be employed for the third and fourth transducers where provided.

Preferably, a phase comparator is provided and the phase difference between the first output signal and the reference signal may be obtained by passing both signals through the phase comparator.

In a further step, the output of the phase comparator is sampled and held until a further measurement is made at a later time. Thus, continuous phase comparisons are not needed, and may be taken instead at intervals in time to construct a sampled output.

The method may comprise, in the step of generating a first ultrasound signal, generating a first signal which comprises a number of first pulses spaced in time. Each first pulse may be produced by generating a plurality of higher frequency second pulses.

The method may comprise the further step of generating a control clock signal, at a relatively low frequency. The method may comprise the further step of generating a first pulse on each or preselected ones of the leading (or trailing) edges of the control clock. A transmission clock signal of higher frequency than the control clock signal may be produced by starting a transmission clock when triggered by the control clock. This saves power. The transmission clock may be at 2 MHz or some other frequency. A second pulse may be generated on each (or preselected) ones of the transmission clock.

The method may further comprise orientating the first transducer relative to the second transducer so that the first emitted signal is reflected one or more times from a wall of the oscillator upon propagating from the first transducer to the second transducer. There may be three reflections of the first emitted signal as it travels from the first emitter to the first receiver. Where a second ultrasound signal is transmitted, this may also be reflected from this or another wall of the meter.

The method may comprise the further step of constructing at least the part of the oscillator at which reflections occur from metal or providing a metal surface coating to improve reflections.

The use of phase modulation of the signal to detect the oscillations is preferred to amplitude modulation because phase modulation can be used over the entire range of the oscillator and provides a substantially linear relationship between flow rate and output signal over almost its entire range.

In a refinement the "time-of-flight" for the first ultrasound signal (and, where appropriate the second ultrasound signal) can be used to calculate the fluid temperature. This can be performed in place of or in addition to measurements made using a temperature sensor. The temperature information can be used to compensate for variation of meter characteristics with temperature.

The method may comprise simultaneously generating two first pulses, shifted in phase by substantially 90° (an initial pulse and a phase shifted pulse). The simultaneously generated pulses may be transmitted through the fluid at substantially the same time, preferably along substantially the same path in opposite directions.

The method may comprise two phases: a first may comprise transmitting the initial pulse from a first transducer and the phase shifted pulse from a second transducer and subsequently receiving the initial pulse at the second transducer and receiving the phase shifted pulse at the first transducer. The second phase may comprise transmitting the initial pulse from the second transducer and the phase shifted pulse from the first transducer and subsequently receiving the initial pulse at the first transducer and receiving the phase shifted pulse at the second transducer. This is advantageous because it allows temperature and other changes within the fluid to be taken into consideration.

The signals received by the first and second transducers may be used as the inputs to a phase comparator.

In the first phase of the method the outputs from either the first or second transducer may be used as the reference to the phase comparator. In the second phase of the method of the other of the outputs of the first or second transducer may be used as the reference.

The phase comparator may be enabled in a period only when processing is required, providing a power efficient system.

The readings obtained in the first and second phases may be averaged, allowing external influences on the reading to be disregarded

In accordance with a third aspect, the invention provides a heating system for a fluid in which a flowing heated fluid is supplied from a source to a number of users, in which the amount of fluid supplied to each (or some) of the users is measured using a flow meter, in accordance with the first aspect of the invention. The flow meter may be adapted to measure the volume of fluid supplied to the user or users. It may be adapted to measure the rate of flow and to measure temperature.

There will now be described, by way of example only, two embodiments of the present invention as shown in the accompanying drawings, in which:-

**Figure 1** shows a sectional view of a typical fluidic oscillator, showing possible placements for a pair of ultrasonic transducers;

**Figure 2** shows the path travelled by the first ultrasound signal from the emitter to the receiver of the transducer pair;

**Figure 3** is a block diagram, illustrating the functional parts of the flow measurement circuit;

**Figure 4** is a timing diagram showing the time relationship between the various electronic and ultrasound signals in the measurement system;

**Figure 5** illustrates the output of the sample and hold circuit over a period of time corresponding to several first pulses;

**Figure 6** is a circuit diagram of an embodiment of a phase detector

**Figure 7** shows an alternative embodiment in which ultrasound signals propagate in two directions through the fluid.

**Figure 8** shows in a block diagram the functional parts of the flow measurement circuit of the alternative embodiment; and

**Figure 9** is a timing diagram showing the time relationship between various electronic and ultrasonic signals in the measurement system of an alternative embodiment.

An example of a fluidic oscillator is shown in Figure 1. Oscillators having these features are well-known and particular geometries will be well-known to a person skilled in the art. Indeed the skilled person will appreciate that other geometries may be preferred to the one shown and the one shown is only provided by way of example. The oscillator comprises a body 2 having a variety of through channels defined therein. The channels comprise a main through flow channel 3 extending completely through the body 2 and having a narrow jet portion 4 disposed towards an upstream end of the through channel 3 (with respect to the direction of flow, in use, of fluid through the oscillator). Downstream from the jet 4, the channel is split into two separate flow paths 5,6 and is separated by a splitter 7, the two flow paths 5,6 recombining into a single channel 3 at a downstream end of the flow meter body 2.

A temperature sensor (not shown) is provided within the splitter 7.

A pair of feedback channels 7,8 are provided which connect a downstream part of a respective one of the two flow paths 5,6 to a point on the wall of the channel 3 between the jet 4 and the point where the main channel splits. The two feedback channels 7,8 open at substantially opposed points on the side walls of the channel 3.

The operation of the flow meter, in use, is as follows. A fluid flowing through the body 2 is attached onto one wall of the flow channel 3 so that it flows substantially through one or other of the two flow paths 5,6. A feedback flow is then established through the feedback channel 7,8 associated with the flow path 5,6 through which the fluid is flowing. This feedback flow effectively "deflects" the flowing fluid across the channel 3 to move to the opposing wall of the channel. Fluid flow will then switch to the other flow path 6,5 until feedback flow through the other feedback channel 8,7 again "deflects" the flow back onto the first wall. This continues, causing the flow to oscillate backwards and forwards from one flow path 5,6 to the other 6,5. The rate of oscillation is dependent upon the overall rate of flow of fluid through the flow meter body 2.

When only one flow path 5,6 is considered in isolation, the effect of this continued oscillation is to cause the rate of flow of fluid in the flow path 5,6 to increase and decrease periodically with a period equal to the period of oscillation of the fluid in the flow meter. This variation in flow rate is detected in this embodiment by providing ultrasonic transducers 10,11 which enable the flow of fluid to be measured ultrasonically. Of course, it will be understood that the description of the layout of the oscillator is only intended to be an example, and that many variations in oscillator design are conceivable within the scope of the invention whereby a rate of oscillation of fluid flow is dependent upon overall rate of flow of fluid through the oscillator.

The ultrasonic transducers 10,11 comprise an ultrasonic emitter 10 and an ultrasonic detector 11 positioned to measure the flow of fluid in one of the flow paths 5,6 as shown in Figures 1 and 2. The emitter 10 may be upstream or downstream of the flow of fluid through the flow path. Any position in which the emitted ultrasound has a component of travel aligned with the direction of flow can be employed.

To maximise path length, the ultrasound transducers 10,11 are positioned so that a first signal emitted by the emitter 10 is reflected several times at several points 12,13,14 (as shown in Figure 2) from the flow path side walls. To maximise reflection, the reflection points, i.e. the side walls, are constructed from metal at the reflection point. On receiving the ultrasonic signal sent down the flow path by the ultrasound emitter, the ultrasound detector generates an output signal dependent upon the emitted signal as it is incident upon the detector.

The method and apparatus for utilising the first output signal to measure the rate of oscillation and hence the rate of flow of fluid is as follows and is shown in block form in Figure 3.

A signal generating means 20 generates a signal 21. This is supplied to the ultrasonic transducer 10 which is adapted to emit a first signal consisting of a burst or pulse train of first pulses, each first pulse comprising a number of second ultrasound pulses of relatively short duration. These pulses propagate through the fluid until they reach the detector 11, whereupon they are converted into a first output (electrical) signal 22. The first output signal 22 is encoded with information about the rate of flow of fluid by virtue of the fact that the time taken for each second pulse in the train to travel from the emitter to the detector varies with flow rate. The received pulse train is therefore phase modulated by the flow of fluid, and comprises second pulses corresponding to the second pulses sent out by the emitter.

In order to extract the phase modulated information indicative of flow rate from the first output signal 22 generated by the detector 11, the first output signal 22 is fed into a phase comparator 25 together with a reference signal against which it is compared. This appears as a delayed version 23 of the electrical signal input to the emitter. This delayed version is obtained by generating a reference signal at some later time which is substantially identical to the signal emitted by the emitter (except that it is shifted in time) and is called the reference signal 23. The purpose of the delay in time 24 is to ensure that the reference signal 23 overlaps the first output signal, and the delay is chosen so that, on average, the phases of the second pulses in the reference signal 23 and the second pulses making up the output signal 22 are in quadrature. Of course, whilst a delay is shown in Figure 3, in practice the delayed signal can be generated at a later time than the first signal, and not generated and then delayed (as shown for ease of representation).

If the flow of fluid is constant during the whole duration of the emitted pulse train, each second pulse in the resulting output signal will be "shifted" in time by the same amount in relation to the corresponding second pulse in the reference signal 23 (i.e. out of phase by a constant amount). If the flow rate varies during the pulse train duration (i.e. within each first pulse), the phase difference between the two signals will oscillate at a rate equal to the oscillation frequency of the flow rate. Thus, observing the rate of oscillation of the phase difference allows the rate of oscillation of the flow in the ultrasound path, and hence overall rate of flow to be calculated.

A phase comparator 25 is used to measure the phase differences. The output of the phase comparator could comprise a series of pulse width modulation signals corresponding to the second pulse signals. After passing the reference signal 23 and output signal 22 through the phase comparator 25, the output from the comparator 25 is passed through a sample and hold circuit 26 which, at the end of the phase comparison, holds a voltage that is proportional to the average width of the pulse width modulated signals output from the comparator. Holding the value is beneficial, as it means that a continuous emission of second pulses is unnecessary.

The long term average of the output of the phase comparator is maintained at a constant value by the use of a feedback element 27, which adjusts the delay in order to maintain overlap between the first output signal and the corresponding pulses of the reference signal and also that the two signals are on average in quadrature.

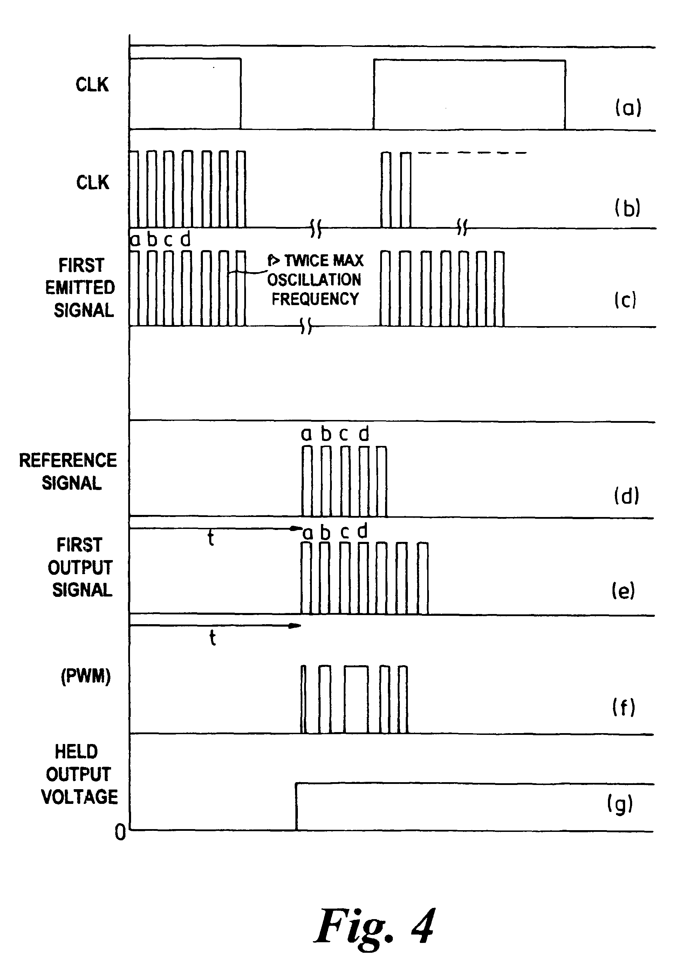

A more detailed analysis of the various signals within the system will now be described with reference to Figure 4 of the accompanying drawings.

The first signal in the electronic circuit is the digital control clock signal. The control clock is a relatively low frequency clock whose frequency governs the repetition rate of the phase measurement and is sufficiently high that aliasing effects of the phase measurement are avoided. A typical frequency of the control clock is 500 Hz to 2 kHz. The control clock signal, CCLK, is shown in trace (a) on Figure 4. It would be possible to derive the control clock from a higher frequency clock.

The next stage in the circuit generates a transmission clock signal TCLK, which has a frequency higher than that of CCLK, say 2 MHz. The choice of the control clock signal frequency is selected to optimise the duty cycle of the system, allowing reasonably large gaps between the measurements. The choice of the TCLK signal frequency determines the period of the second pulses. The signal TCLK is shown in Figure 4 (b).

The first signal emitted by the ultrasonic emitter is constructed from a number of transmission clock pulses TCLK commencing with a leading edge of the control clock CCLK. Detection of the leading edge is a convenient form of triggering generation of the emitted signals. On each transmission clock pulse TCLK, a second pulse is emitted. Of course, it could be achieved using the trailing edge as a trigger. After a predetermined number of second pulses are emitted, the emitted first signal is stopped (and the transmission clock is also stopped) until another leading edge of the control clock arrives. Each train of second pulses defines a first pulse in the meaning of the preceding description. The first emitted signal is shown in Figure 4(c), and is fed to the ultrasonic emitter, whereupon it is transmitted into the fluid along a flow path to the ultrasonic detector. On reaching the detector, an output signal as shown in Figure 4(e) is produced. The output signal is delayed in time relative to the emitted signal due (a) to the length of time taken to pass through the fluid, and (b) the rate of flow of the fluid, so that as the rate of flow changes, the transit time varies.

The next stage in the measurement process is the production of a reference signal (Figure 4d) which is used as a comparison to detect phase changes in the first output signal produced by the receiver as a result of variations in the rate of fluid flow. The reference signal comprises a series of second pulses of the same frequency as the emitted signal, and positioned in time so that several of the second reference pulses overlap with the second pulses of the measured first output signal. To do this, it is again convenient to use the transmission clock to generate the second pulses of the emitted signal commencing after a delay so that a suitable time lapse is provided. By applying a common delay in time and using the same clock TCLK to trigger the second pulses of the emitted signal and the second pulses of the reference signal, the relative phase shifts between each emitted signal and corresponding reference signal pulse will be the same.

The purpose of the delay is to ensure overlap between the second pulses of the first output signal and the corresponding second pulses of the reference signal. If they do not overlap, the phases cannot be compared successfully.

The reference signal is then fed together with the output signal into a phase comparator to produce a second output signal as shown in Figure 4(f). To minimise power consumption a sample clock controlling the phase comparator only runs when the first signal is generated and is switched off between measurements. The second output signal comprises a plurality of pulses of varying width. The width of each pulse corresponds with the phase difference between the first output signal and the reference signal. The optimal performance of the phase comparator occurs when the average phase shift is 90° (i.e. reference signal and output signal in quadrature). It is known that variations can occur due to changes in the arrival time of the first output signal, perhaps due to temperature changes or other effects. A slow acting feedback loop 27 whose speed of response is slower than the lowest frequency of oscillation which is required to be detected, is used to ensure that this quadrature difference is maintained over time by adjusting the delay slightly either side of its preset value.

Because the first output signal is phase shifted from the reference signal due to oscillation of the fluid, the output of the phase comparator is pulse width modulated by the rate of oscillation of the fluid. Thus, and because square wave pulses are used, the actual amplitude of the ultrasonic signal reaching the detector (and hence amplitude of the output signal) is to a certain extent irrelevant to the operation of the detector scheme. The use of phase information has been found to offer a considerably more linear output for a wide range of flow rates than an amplitude modulation scheme. It should be noted that by ensuring that the frequency of the second pulses is considerably higher than the rate of oscillation, each second pulse in a first pulse will be shifted by approximately the same amount.

A sample and hold circuit is used to retain the output of the phase comparator until the next measurement is made (i.e. next emitted first pulse is detected by the detector and fed to the comparator with the next corresponding reference signal). This allows power consumption to be reduced. A typical "held" output is shown in Figure 4(g).

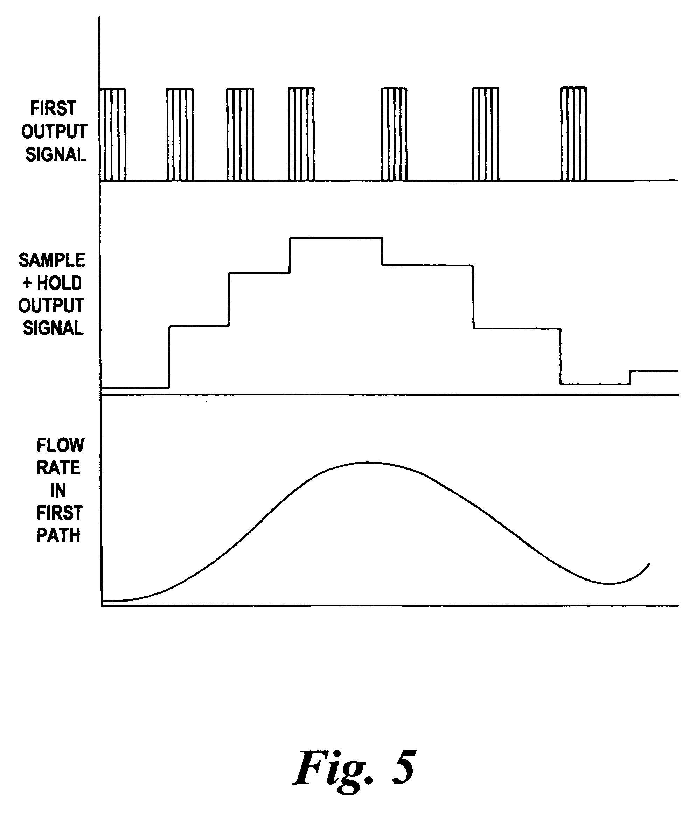

Figure 5 shows how the "held" output builds up a "measurement" of flow rate changeover time for several held samples. The use of the second pulses in this case helps to refine the measurement for each first pulse by averaging.

In a practical system, the phase of the first output signal will be modulated by the fluidic oscillator at frequencies varying from 0.3 Hz to about 140 Hz. Thus, the second output from the phase comparator may be altered to remove any 2 MHz ripple without loosing any relevant phase information.

By comparing the sampled outputs over time, an overall measurement of the rate of oscillation of flow is built up. This enables the rate of oscillation of the phase, i.e. flow rate of the fluid, to be determined. To be successful, the frequency of the first pulses in the emitted signal (i.e. each bundle of second pulses) must be chosen to be at least twice the highest expected frequency of oscillation of the rate of flow of fluid. This is achieved by making CCLK > twice the frequency of oscillation .

The transmission clock frequency TCLK must also be chosen after consideration of the maximum expected phase shift. Obviously, the phase shift should be restricted to a maximum of ±90° phase of the second pulses. To ensure it is kept within this range, the path lengths and TCLK frequency must be carefully selected. Preferably, the path length is trimmed to an easily achievable delay rather than altering the delay to suit a fixed path length.

If each emitted burst of signals (first phase) is made up of, for example 5 second pulses, and the sample clock rate is 500 Hz, the emitter is only operating for 2,500 cycles out of any 2,000,000 cycles. This achieves a considerable reduction in power in comparison to a design in which the emitter is constantly sending out signals (i.e. a continuous stream of second pulses or similar).

In a typical application, at a 2 MHz transmission clock frequency TCLK, a one degree phase shift represents a delay of 1.39ns and the minimum phase shift which is required to be measured can be as small as 0.15°. Thus, it is essential to keep the average delay of the reference signal constant during one cycle of the fluidic oscillator.

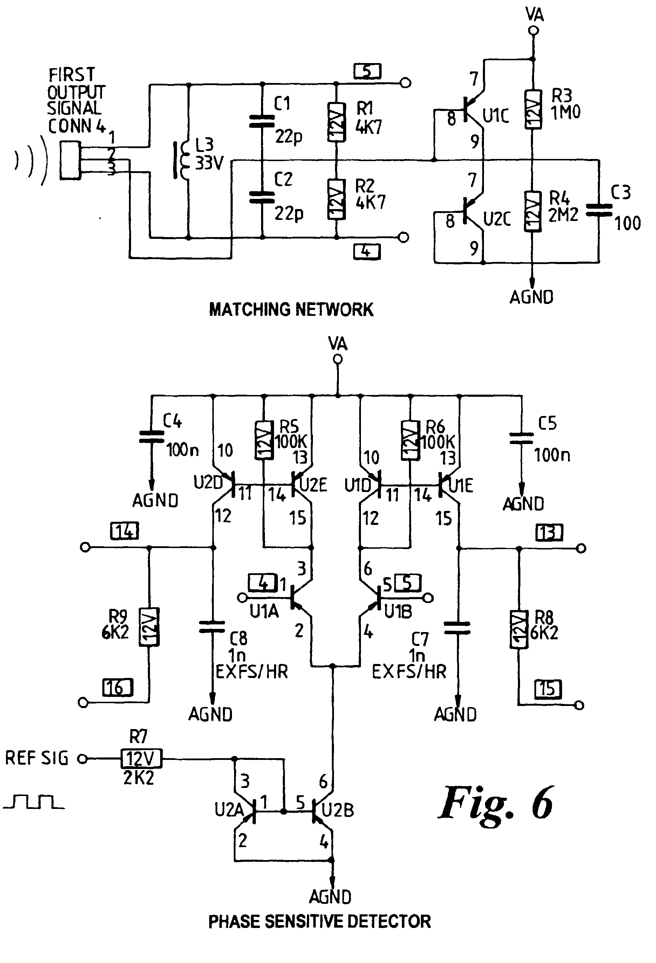

A specific description of one embodiment of a phase detector which can form a part of an electronic circuit is shown in Figure 6 which implements this invention.

The phase sensitive detector is based around a transmitter array, such as a CA3096 array, and depends upon the inherent matching between the devices.

The input signal from the transducer is fed via a twisted-pair and screened cable to connector CONN4. The screen is linked to the common-mode bias potential defined by resistors R3/R4 and capacitor C3.

Ideally, the screen should not be connected at the transducer end; it being assumed that the transducer is floating with respect to system ground.

Diode connected transistors U1C/U2C clamp the common-mode potential to the supply rails. Any interfering signals are assumed to have a high source-impedance.

The resistors R1/R2 provide the steady-state base current for the differential-amplifier stage of the phase comparator formed by the matched transistors U1A/U1B. Capacitors C1/C2, and the cable, provide the transient current required during switching.

Inductor L3 tunes the input stage and the transducer to the 2 MHz operating frequency. The Q-factor is deliberately kept low. It should be noted that the filter introduces a 90° phase-shift.

The reference signal comprising a number of pulses is applied directly to resistor R7. This drives pulses of approximately square wave current into the n-p-n mirror connected transistor pair U2A/U2B. The peak current is approximately 1mA. The mirrored-current flows in the collector of transistor U2B and provides the tail current for the differential stage U1A/U1B.

The input signal is applied to the bases of U1A/U1B from nodes 4 and 5. This signal (indicative of the first output signal) steers the current to the p-n-p mirror connected transistor pairs U1D/U1E and U2D/U2E. The net result depends upon the phase difference between the tail current and the signal voltage. For example, if the tail current is turned on exactly in phase with a positive signed voltage applied between nodes 5 and 4, the majority of the tail current will be routed to node 13.

Conversely, if the tail current is turned on exactly in phase with a negative signed voltage applied between nodes 5 and 4, the majority of the tail current will be routed to node 14.

The optimum sensitivity is obtained at a phase-difference of ±90°, in which case the average currents in each branch will be approximately equal.

The low leakage currents of the CA3096 device in the off state allow the PSD to function simultaneously as a sampling switch.

The currents flowing into nodes 13 and 14 are filtered by means of C7/R8 and C8/R9. The resistors are connected from the nodes to ground during the sampling interval using an oscillator, sampling switch (not shown).

Outside the sampling interval, the resistors are open-circuited and the voltage acquired at nodes 13 and 14 is held on capacitors C7/C8 until the next sample is taken.

Ultimately, a balance will be achieved between the currents entering and leaving the individual nodes. The node voltages required to maintain this condition provides a measure of the average node current and therefore the phase difference.

The key advantage of such a current steering technique is that it is a low power technique compared to alternate phase detection techniques. The use of current steering ensures that a very rapid switching response is not required, so long as the node voltages settle down eventually to the correct average voltage over the sampling interval.

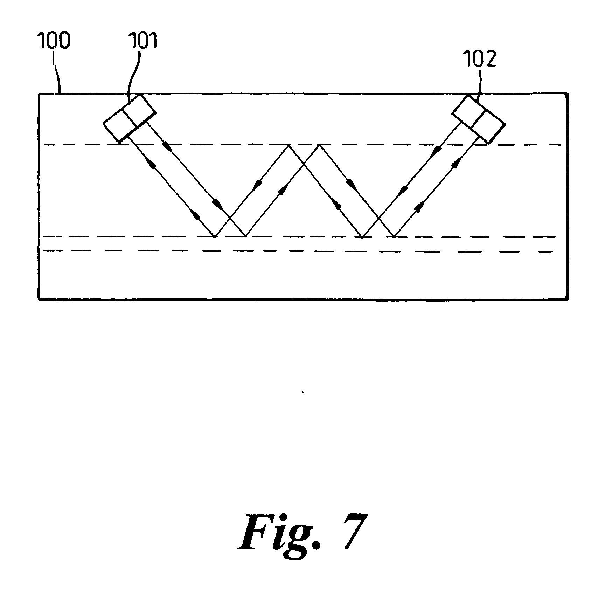

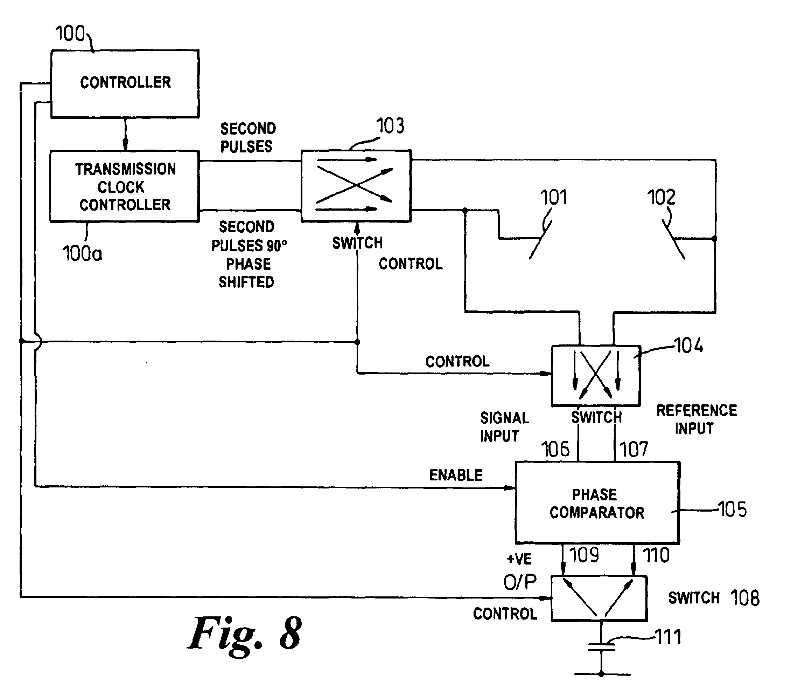

A second embodiment is shown in Figures 7 and 8.

In Figure 7, instead of a single emitter and receiver, a first transducer 101 and a second transducer 102 are disposed in a conduit 100 and are adapted to transmit both a first ultrasound signal along a first path in one direction along the conduit and a second ultrasound signal (which may be thought of as a reference signal) in a second, opposite, direction along the conduit. Thus, whereas only a single signal is transmitted in the first embodiment, two signals are transmitted in the second embodiment.

The schematic operation of the second embodiment is shown in Figure 8. A controller 100 generates a control clock CCLK which generates a first signal comprising a plurality of first pulses at a fixed frequency of, say, 1 kHz. On each leading edge of these first pulses a transmission clock controller 100a generates two sets of second pulses at a higher frequency of, say, 2 MHz. These two sets of second pulses have within them an identical number of pulses but are electronically shifted by 90°. Switch 103 enables the two sets of second pulses to be routed either to transducer 101 or 102. In the first phase of the measurement the first set of second pulses are routed to transducer 101 and the 90° phase shifted second pulses are routed to transducer 102. The two sets of second pulses are transmitted simultaneously. Those from the transducer 101 propagate to the transducer 102 to produce a first output signal. Those from 102 propagate to the transducer 101 to produce an additional first output signal.

The signal from transducer 102, the first output signal, is fed into a phase comparator 105 via the switch 104 which enables it to be routed either to the signal input 106, or the reference input 107, of the comparator. The additional first output signal from transducer 101 is also fed into the phase comparator via the switch 104 which enables it to be fed to the signal input 106 or reference input 107 of the phase comparator.

The phase comparator consists of a double-balanced modulator which can be constructed using discrete components or available as an integrated circuit, the design of which is well-known to those versed in the art. The key advantage of using such a current steering technique is that it is a low power technique compared to alternate phase detection techniques.

In the first phase of the measurement the first output signal from transducer 101 is fed into the signal input of the phase comparator 106 and the first output signal from transducer 102 is fed into the reference input of the phase comparator 107.

The phase comparator is only enabled for a period which commences just before the arrival of the first output signal and is disabled after the first output signal has finished. The phase comparator provides two output currents which for constant input amplitude of the signals to its two inputs and for signals whose average phase difference is 90° are proportional to the phase shift caused by the flow of fluid. As the phase between the two first output signals applied to the signal and reference inputs of the phase comparator varies the two output currents available at 109 and 110 vary in anti-phase.

A switch 108 enables either of the outputs 109 or 110 to be connected to the storage capacitor 111. In phase 1 of the measurement it is connected to output 109. At zero flow at the end of the phase comparison the capacitor will have an average stored value which corresponds to the 90° phase shift between the two signals. With flow the value on the capacitor will change linearly with the flow velocity in the channel and thus with oscillating flow will change in an oscillating manner, tracking the flow velocity changes.

In the second phase of measurement the switches 103, 104 and 108 are changed to effect the following connections. The first set of second pulses is connected to transducer 102 and the second set of pulses is connected to transducer 101. The output from transducer 101 is connected to the reference input 107 of the phase comparator and the output from transducer 102 is connected to the signal input 106 of the phase comparator. The capacitor 111 is connected to output 110 of the phase comparator. The signal generated on the capacitor 111 in terms of flow in this phase will be identical to that provided by the first phase of measurement.

Toggling between the two phases is advantageous due to two effects caused by rapid temperature fluctuations in the fluid. The first is that amplitude modulation of the first output signal occurs when rapid temperature fluctuations occur. The second is that the position of the enable signal of the comparator, since it is fixed in time, moves with respect to the arrival time of the first output signal since its arrival time depends on the speed of sound in the fluid which is itself a function of temperature. It has been noted that the modulation of the amplitude of the first output signal and its arrival time can occur at the frequency of the fluidic oscillation or at harmonically related frequencies or randomly. The phase detector is sensitive to both these effects and can provide outputs which contain significant harmonic content or even noise. In phase 1 these effects will add or subtract to the output due to the phase shift created by the flow velocity. In phase 2 these effects will subtract or add to the output due to the phase shift created by the flow velocity. Thus the average phase measurement over phases 1 and 2 is substantially the phase shift due to the flow velocity. By toggling between the two phases of the measurement and averaging out the measurements between the two phases, the effects caused by the modulation of the amplitude and arrival time of first output signal can be substantially reduced.

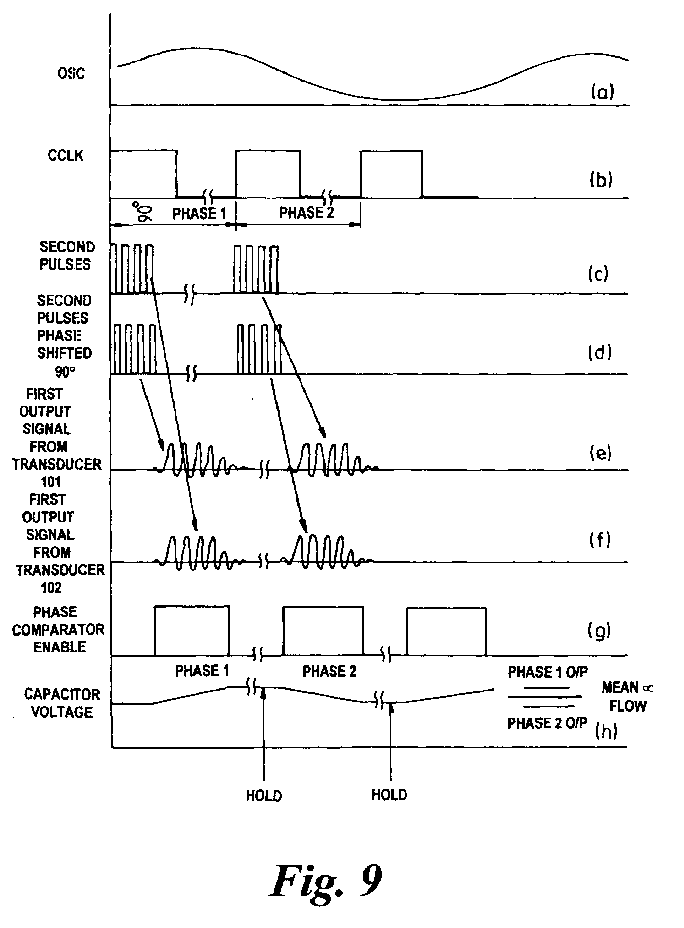

Figure 9 shows the timing diagram of the electrical and ultrasonic signals in the second embodiment. Figure 9a shows the frequency of oscillation of a fluid within the meter and Figure 9(b) shows the control clock for the two phases of the measurement. Figures 9(c) and 9(d) show the two sets of second pulses associated with the control clock. These both contain the same number of transmission clock pulses but one set is phase shifted by 90° with respect to the other. Figure 9 (e) shows the first output signal on transducer 101 and its relationship to the second pulses in figures 9(c) and 9(d), and figure 9(f) shows the relationship of the first output signal from transducer 102 and its relationship to the second pulses in figure 9(c) and 9(d). The pulses in Figures 9(e) and 9(f) are phase shifted by 90°. Figure 9 (g) shows that the phase comparator enable occurs only during the time associated with the first two output signals on transducers 101 and 102. Figure 9(h) shows the voltage on capacitor 111 over two cycles of the measurement and shows that the voltage averaged over the two phases corresponds to the phase shift associated with flow and provides rejection of phase shifts created by other artefacts.

It will be understood that the invention lies, at least in one aspect, in the use of phase information to determine the rate of oscillation of fluid in a flow meter, which can in turn be used to determine the rate of fluid flow through the oscillator. The use of phase information allows a very low power measurement device to be realised. This is further enhanced through the use of a "burst" operation of the emitters and low powered devices to generate timing waveforms. The ability to turn off the device in response to temperature measurements also reduces power consumption in many suitable applications.

## Claims

1. A meter (1) in which the rate of flow of fluid in at least a first portion of the meter (1) varies periodically as a function of the overall rate of flow of fluid (such as a fluidic oscillator), in which the meter (1) is provided with at least a first and second ultrasonic transducer (10, 11), said first transducer (10) being adapted to transmit a first ultrasound signal and said second transducer (11) being adapted to receive said emitted ultrasound signal from said first transducer (10) after it has propagated through fluid in the first portion of the meter to produce a first output signal,
characterised by further comprising a processing means adapted to compare the phase of the first output signal from the second transducer (11) with the phase of a reference signal to produce a second output signal,
said second output signal being adapted to provide information indicative of the flow rate of the fluid being monitored.

2. A meter according to Claim 1 characterised in that a third and fourth transducer (101, 102) is provided, and the third transducer is adapted to transmit a second ultrasound signal through fluid in the first portion of the meter and said fourth transducer is adapted to receive said second signal to produce said reference signal.

3. A meter according to Claim 1 characterised in that the reference signal is produced electronically without being generated from a second signal which has propagated through the fluid, and is compared with the first output signal.

4. A meter according to any preceding claim characterised in that the first signal comprises a plurality of first pulses, and the reference signal comprises one or more corresponding first pulses.

5. A meter according to Claim 4 characterised in that each first pulse in said first signal comprises one or more second pulses.

6. A meter according to Claim 4 or Claim 5 characterised in that the reference signal and the first signal are generated and transmitted through the fluid substantially simultaneously.

7. A meter according to Claim 6 in which the first signal and reference signal are in quadrature and transmitted and received using circuitry which ensures reciprocal action.

8. A meter according to Claim 7 characterised by further comprising a transmission clock signal TCLK of higher frequency than the control clock frequency and said first signal comprises a train of second pulses at the transmission clock frequency which starts upon a predetermined (or each) rising (or trailing) edge of the control clock, the frequency of the control clock determining the frequency of the first pulses in the first signal.

9. A meter according to any one of Claims 5 to 8 characterised in that the number of second pulses in each first pulse of the first emitted signal and the number of second pulses in the first pulse of the reference signal can be varied.

10. A meter according to any preceding claim characterised in that monitoring means are provided to monitor the temperature of the fluid so as to compensate for thermal drifts in accuracy.

11. A meter according to any preceding claim characterised in that a flow monitoring means is provided to "turn-off" or deactivate at least a part of the apparatus when the overall flow rate drops below a preset level.

12. A meter according to any preceding claim characterised in that reflecting surface(s) of the meter are metallised or constructed of metal.

13. A meter according to Claim 4 characterised in that the frequency of the first pulse train is variable.

14. A meter according to any preceding claim characterised in that the transducers are located outside of the flow of fluid through the oscillator.

15. A meter according to any preceding claim wherein the location of a transducer is adjustable relative to the meter body so as to trim the ultrasonic path length.

16. A method of measuring the rate of flow of fluid through a flow meter characterised by the steps of:

generating a first ultrasound signal using a first transducer (10), receiving said ultrasound signal using a second transducer (11) adapted to produce a first output signal dependent upon said first signal incident upon said second transducer (11) after propagating along a first path through the meter having a component of travel in the direction of flow of fluid in the oscillator;
generating a reference signal for comparison with said first signal, and comparing the phase of the first output signal with the phase of the reference signal to produce a second output signal indicative of the rate of flow of fluid through the meter.

17. A method according to Claim 16 characterised in that the "time-of-flight" for at least the first ultrasound signal can be used to calculate the fluid temperature.

18. A method according to claims 16 or 17 wherein the first ultrasound signal and reference signal are generated and transmitted through the fluid substantially simultaneously.

19. A heating system for a fluid is supplied from a source to a number of users, in which the amount of fluid supplied to each one or more of the users is measured using a meter according to any one of claims 1 to 15.

EP 1 094 304 A1

**Fig. 1**

**Fig. 2**

**Fig. 3**

EP 1 094 304 A1

*Fig. 4*

14

FIRST
OUTPUT
SIGNAL

SAMPLE
+ HOLD
OUTPUT
SIGNAL

FLOW
RATE
IN
FIRST
PATH

*Fig. 5*

MATCHING NETWORK

*Fig. 6*

PHASE SENSITIVE DETECTOR

*Fig. 7*

**Fig. 8**

CONTROLLER 100

TRANSMISSION CLOCK CONTROLLER 100a

SECOND PULSES

SECOND PULSES 90° PHASE SHIFTED

103

SWITCH CONTROL

102

101

104

SWITCH

CONTROL

REFERENCE INPUT

SIGNAL INPUT

107

106

ENABLE

PHASE COMPARATOR 105

110

109

+VE O/P

SWITCH 108

CONTROL

111

OSC — (a)

CCLK — (b)

90° PHASE 1 PHASE 2

SECOND PULSES — (c)

SECOND PULSES PHASE SHIFTED 90° — (d)

FIRST OUTPUT SIGNAL FROM TRANSDUCER 101 — (e)

FIRST OUTPUT SIGNAL FROM TRANSDUCER 102 — (f)

PHASE COMPARATOR ENABLE — (g)

PHASE 1 PHASE 2

CAPACITOR VOLTAGE — (h)

PHASE 1 O/P
MEAN ∝ FLOW
PHASE 2 O/P

HOLD HOLD

*Fig. 9*

European Patent
Office

**EUROPEAN SEARCH REPORT**

Application Number

EP 99 30 8169

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 00685 A (ROCKY MOUNTAIN RESEARCH INC) 8 January 1998 (1998-01-08) | 16-19 | G01F1/32 G01F1/66 |
| Y | * abstract; figure 2 * | 1 | |
| Y | US 5 864 067 A (LIGNEUL PATRICE ET AL) 26 January 1999 (1999-01-26) * abstract; figures 1,5-7 * | 1 | |
| A | US 5 152 174 A (LABUDDE EDWARD V) 6 October 1992 (1992-10-06) * abstract; figure 2 * | 1,2,16 | |

TECHNICAL FIELDS
SEARCHED    (Int.Cl.7)

G01F

The present search report has been drawn up for all claims

| Place of search | Date of completion of the search | Examiner |
|---|---|---|
| BERLIN | 14 February 2000 | Vorropoulos, G |

EPO FORM 1503 03.82 (P04C01)

**EP 1 094 304 A1**

## ANNEX TO THE EUROPEAN SEARCH REPORT
## ON EUROPEAN PATENT APPLICATION NO.

EP 99 30 8169

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2000

| Patent document cited in search report | | Publication date | Patent family member(s) | | Publication date |
|---|---|---|---|---|---|
| WO 9800685 | A | 08-01-1998 | AU | 3645797 A | 21-01-1998 |
| | | | CA | 2259372 A | 08-01-1998 |
| US 5864067 | A | 26-01-1999 | FR | 2721360 A | 22-12-1995 |
| | | | AU | 703888 B | 01-04-1999 |
| | | | AU | 2742895 A | 15-01-1996 |
| | | | CA | 2192583 A | 28-12-1995 |
| | | | CN | 1151788 A | 11-06-1997 |
| | | | EP | 0835385 A | 15-04-1998 |
| | | | WO | 9535448 A | 28-12-1995 |
| | | | JP | 10501605 T | 10-02-1998 |
| | | | PL | 317644 A | 14-04-1997 |
| US 5152174 | A | 06-10-1992 | NONE | | |